(19) Europäisches Patentamt / European Patent Office / Office européen des brevets

(11) **EP 2 597 833 B1**

(12) **EUROPEAN PATENT SPECIFICATION**

(45) Date of publication and mention of the grant of the patent:
**17.05.2017 Bulletin 2017/20**

(51) Int Cl.:
***H04L 25/02*** *(2006.01)*

(21) Application number: **11190302.7**

(22) Date of filing: **23.11.2011**

(54) **Method and a device for estimating a link between a source and a receiver using SC-FDMA**

Verfahen und Vorrichtung zur Beurteilung eines Links zwischen einer Quelle und einem Empfänger mithilfe von SC-FDMA

Procédé et dispositif pour estimer une liaison entre une source et un récepteur utilisant SC-FDMA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.05.2013 Bulletin 2013/22**

(73) Proprietors:
• **Mitsubishi Electric R&D Centre Europe B.V.**
  **1119 NS  Schiphol Rijk (NL)**
  Designated Contracting States:
  **FR**
• **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **Brunel, Loïc**
  **35708 RENNES Cedex 7 (FR)**
• **Vasconcelos Fontes, Felipe**
  **35708 RENNES Cedex 7 (FR)**

(74) Representative: **Le Guen-Maillet**
  **5, place de Newquay**
  **BP 70250**
  **35802 Dinard Cedex (FR)**

(56) References cited:
• **THE-HANH PHAM ET AL: "A joint channel estimation and data detection receiver for multiuser MIMO IFDMA systems", IEEE TRANSACTIONS ON COMMUNICATIONS, IEEE SERVICE CENTER, PISCATAWAY, NJ. USA, vol. 57, no. 6, 1 June 2009 (2009-06-01), pages 1857-1865, XP011262839, ISSN: 0090-6778, DOI: 10.1109/TCOMM.2009.06.070555**
• **YANG LIU ET AL: "Simplified EM channel estimation in LTE systems", ACOUSTICS, SPEECH AND SIGNAL PROCESSING (ICASSP), 2011 IEEE INTERNATIONAL CONFERENCE ON, IEEE, 22 May 2011 (2011-05-22), pages 3480-3483, XP032000563, DOI: 10.1109/ICASSP.2011.5946227 ISBN: 978-1-4577-0538-0**
• **XINGZHONG XIONG ET AL: "Effect of channel estimation error on the performance of Interleave-Division Multiple Access systems", ADVANCED COMMUNICATION TECHNOLOGY, 2009. ICACT 2009. 11TH INTERNATIONAL CONFERENCE ON, GIRI, PISCATAWAY, NJ, USA, 15 February 2009 (2009-02-15), pages 1538-1542, XP031445666, ISBN: 978-89-5519-138-7**
• **YANG LIU ET AL: "EM-Based Channel Estimation for Coded Multi-Carrier Transmissions", IEEE TRANSACTIONS ON WIRELESS COMMUNICATIONS, IEEE SERVICE CENTER, PISCATAWAY, NJ, US, vol. 10, no. 10, 1 October 2011 (2011-10-01), pages 3185-3195, XP011389657, ISSN: 1536-1276, DOI: 10.1109/TWC.2011.080311.100249**

**Description**

The present invention relates generally to a method and a device for estimating a link between a source and a receiver using single carrier frequency division multiple access (SC-FDMA) scheme also known as discrete Fourier transform-spread orthogonal frequency division multiplex (DFT-S-OFDM) scheme.

The link is for example a wireless link or a wired link like used in power line communication.

Single-carrier FDMA (SC-FDMA) is a frequency-division multiple access scheme. Like other multiple access schemes, it deals with the assignment of multiple users to a shared communication resource. SC-FDMA can be interpreted as a linearly precoded orthogonal frequency division multiple access (OFDMA) scheme, in the sense that it has an additional DFT processing preceding the conventional OFDMA processing. Just like in OFDM, guard intervals with cyclic repetition are introduced between blocks of symbols in view to efficiently eliminate time spreading caused by multi-path propagation among blocks of symbols.

The distinguishing feature of SC-FDMA is that it leads to a single-carrier transmit signal, when appropriate sub-carriers are used, in contrast to OFDMA which is a multi-carner transmission scheme.

Appropriate sub-carriers are sub-carriers which are equally spaced.

Owing to its inherent single carrier structure, a prominent advantage of SC-FDMA over OFDM and OFDMA is that its transmit signal has a lower peak-to-average power ratio (PAPR). This low-PAPR property still holds when sub-carriers are different from the appropriate sub-carriers.

Intuitively, the reasoning lies in the fact that while in OFDM the transmit symbols directly modulate the multiple sub-carriers, in SC-FDMA the transmit symbols are first pre-processed by a DFT block.

As hardware capacity is continuously increasing, it becomes feasible to implement iterative receivers allowing for improvement of physical layer functions. Among these functions, channel estimation especially benefits from data-aided methods requiring a feedback from the channel decoder. The iterative expectation-maximization is one of them.

Data aided channel estimation is beneficial in a receiver implementing the iterative or turbo principle. In iterative receivers, the turbo principle is based on the exchange of soft information between different modules. The soft information at the output of one block is fed to another block as *a priori* information and the latter block uses this additional information in order to boost its performance.

At least one of the blocks is a decoder and interleaving of the coded bits is beneficial in order to make the soft information on two adjacent bits as much independent as possible.

The turbo principle can be applied on the channel estimation. After soft detection, data symbols are used as pilots to refine the channel estimation. However, a mechanism is needed to inform the estimator on how far it should trust these "new pilots" and this is the way soft information is used. The soft detection does not only provide the most probable modulation symbol, but also its *a posteriori* probability and the *a posteriori* probability of other modulation symbols. Thus, the channel estimator block knows which "pilots" it should trust most.

The paper of Yang Liu entitled "Simplified EM channel estimation in LTE system" published in acoustic speech and signal processing on May 22, 2011 discloses iterative channel estimation.

The paper of Hanh Pham entitled "A joint channel estimation and data detection receiver for multiuser MIMO IFDMA systems" published in IEEE transaction on

The paper of Xingzhong Xiong entitled "Effect of channel estimation error on the performance of interleave division multiple access system" published in advanced communication technology on February 15, 2009 discloses channel estimation based on expectation maximization algorithm.

The paper of Yang Liu entitled "EM based channel estimation for coded multicarrier transmission" published in IEEE transaction on wireless communications on October 01, 2011 discloses Expectation maximization based iterative algorithm.

The present invention aims at providing a method and a device which enable an iterative estimation of a channel impulse response by a receiver.

To that end, the present invention concerns a method for estimating a channel impulse response between a source and a receiver, data transmitted by the source being coded and organized as data symbols, data symbols being converted from serial to parallel and spread in the frequency domain by a Discrete Fourier Transform, the data symbols spread in the frequency domain being mapped on P sub-carriers allocated for transmission among N sub-carriers of a frequency band, transformed back in the time domain by an Inverse Discrete Fourier Transform module, parallel to serial converted and transferred to the receiver under the form of signals representative of data symbols, characterized in that the method comprises the steps, executed by the receiver of:

- determining a first matrix with size PxL, L being the number of taps assumed in the channel impulse response and determining a Discrete Fourier Transform matrix of size PxP,
- demodulating the received signals representative of data symbols, in order to produce received data symbols,
- parallelizing the received data symbols,

- executing a Discrete Fourier Transform on the parallelized received data symbols,
- demapping the transformed received data symbols from the sub-carriers,
- estimating iteratively the channel impulse response from the demapped received data symbols, the channel estimation being dependent of the first matrix, the Discrete Fourier Transform matrix and of a second matrix which is defined according to a posteriori probabilities that the transferred data symbols are equal to possible modulation symbols of the modulation scheme.

The present invention also concerns a device for estimating a channel impulse response between a source and a receiver, data transmitted by the source being coded and organized as data symbols, symbols being converted from serial to parallel and spread in the frequency domain by a Discrete Fourier Transform, the data symbols spread in the frequency domain being mapped on P sub-carriers allocated for transmission among N sub-carriers of a frequency band, transformed back in the time domain by an Inverse Discrete Fourier Transform module, parallel to serial converted and transferred to the receiver under the form of signals representative of data symbols, characterized in that the device is included in the receiver and comprises:

- means for determining a first matrix with size PxL, L being the number of taps assumed in the channel impulse response and determining a Discrete Fourier Transform matrix of size PxP ,
- means for demodulating the received signals representative of data symbols, in order to produce received data symbols,
- means for parallelizing the received data symbols,
- means for executing a Discrete Fourier Transform on the parallelized received data symbols,
- means for demapping the transformed received data symbols from sub-carriers,
- means for estimating iteratively the channel impulse response from the demapped received data symbols, the channel estimation being dependent of the first matrix, the Discrete Fourier Transform matrix and of a second matrix which is defined according to a posteriori probabilities that the transferred data symbols are equal to possible modulation symbols of the modulation scheme.

Thus, the channel estimation is improved from one iteration to another, by efficiently using the a posteriori probabilities that the transferred data symbols are equal to possible modulation symbols of the modulation scheme.The second matrix is a diagonal matrix, the elements of which being diagonal elements of a third matrix obtained from the Discrete Fourier Transform matrix and from a fourth matrix, the elements of the fourth matrix being equal to:

$$R_{k,k} = \sum_{l=0}^{M-1} APP_i(X_k = \alpha^l) |\alpha^l|^2$$

and

$$R_{l,j} = \sum_{y=0}^{M-1}\sum_{x=0}^{M-1} APP_i(X_l = \alpha^x) \cdot APP_i(X_j = \alpha^y) \cdot \alpha^x \alpha^{y^*} \quad \text{for} \quad l \neq j$$

where $APP_i(X_k=\alpha^l)$ is the a posteriori probability that data symbol $X_k$ is equal to $\alpha^l$, $\alpha^l$ is the l-th modulation symbol of the possible modulation symbols, M is the total number of possible modulation symbols and $(.)^*$ denotes the conjugate of (.).

Thus, all a posteriori probabilities that the transferred symbols are equal to possible modulation symbols of the modulation scheme are efficiently used by creating the fourth matrix.The the second matrix is equal to :

$$\mathbf{R_{FX}} = \text{diag}\left(\overline{\text{diagM}}\left(\mathbf{FRF^\dagger}\right)\right)$$

where diag(.) denotes a diagonal matrix, in which vector (.) is the diagonal, diagM(.) denotes a vector made of the elements of the diagonal of the matrix (.), $\mathbf{F}$ is the Discrete Fourier Transform matrix and $(.)^\dagger$ denotes the transpose conjugate of (.) The channel estimation is dependent of the second matrix as being calculated from the trace of the second matrix.

Thus, a better stability of the channel estimation is obtained through iterations. Indeed, by computing the channel estimate using the trace of the second matrix, no matrix inversion is required.The denominator of the channel impulse response at the (i+1)-th iteration is the trace of $\mathbf{R_{FX}}$ = diag (diagM($\mathbf{FRF}^{\dagger}$)).

According to a particular feature, the channel impulse response at the (i+1)-th iteration is determined according to the following formula:

$$h_l^{(i+1)} = \frac{A_l + B_l + C_l}{\text{Trace}(\mathbf{R_{FX}})}$$

where $A_l$, $B_l$, and $C_l$ are determined for each l=0 to L-1, $h_1^{(i)}$ is the 1-th tap of the channel impulse response at the i-th iteration,

$$A_l = h_l^{(i)}\text{Trace}\left(\mathbf{R_{FX}}\right)$$

$$B_l = \beta_l \sum_{k=0}^{P-1} \Omega_{k,l}^* Y_k \left(\mathbf{FX}\right)_k^*$$

$$C_l = -\beta_l \sum_{k=0}^{P-1} \Omega_{k,l}^* H_k \left(\mathbf{FRF}^{\dagger}\right)_{k,k}$$

$$H_k = \sum_{l'} h_{l'}^{(i)} \Omega_{k,l'}$$
.

$\Omega_{k,l'}$ is the coefficient at k-th row and l'-th column of the first matrix $\Omega$, $Y_k$ is the k-th coefficient of a size P vector of demapped received data symbols,

$(.)^{\dagger}$ denotes the transpose conjugate of (.) and $(.)^*$ denotes the conjugate of (.)

According to a particular feature, the source further transfers pilot symbols spread in the frequency domain by the Discrete Fourier Transform and the receiver sets the a posteriori probability of each pilot symbol to the value one for the symbol value equal to the pilot symbol and to the value zero for other symbol values.

Thus, the pilot symbols can be used in each iteration, improving the channel estimation beyond what would be achieved by only using a posteriori probabilities that the transferred data symbols are equal to possible modulation symbols of the modulation scheme.

According to a particular feature, the source further transfers pilot symbols not spread in the frequency domain by the Discrete Fourier Transform and in that the channel impulse response is further dependent of the sum of the energies of the pilot symbols.

Thus, the pilot symbols can be used in each iteration, improving the channel estimation beyond what would be achieved by only using a posteriori probabilities that the transferred data symbols are equal to possible modulation symbols of the modulation scheme. Having pilot symbols which are not spread in the frequency domain will enable more efficient initial channel estimation on pilot symbols.

According to a particular feature, the channel impulse response is estimated iteratively a predetermined number of times.

Thus, the channel estimation complexity is bounded, the predetermined number of iterations being determined in order to obtain a given channel estimation improvement of iterative channel estimation compared to non-iterative channel estimation. Furthermore, iterating beyond a certain number of iterations does not bring further significant channel estimation performance improvement.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and apparatus according to the invention, they will not be repeated here.

The characteristics of the invention will emerge more clearly from a reading of the following description of an example of embodiment, the said description being produced with reference to the accompanying drawings, among which :

Fig. 1 represents a link in which the present invention is implemented;
Fig. 2 is a diagram representing the architecture of a receiver in which the present invention is implemented ;
Fig. 3 discloses a block diagram of components of a network interface of the receiver according to the present invention;
Fig. 4 discloses a block diagram of components of a channel estimation module according to the present invention;
Fig. 5 discloses an example of an algorithm executed by a receiver according to a first mode of realization of the present invention;
Fig. 6 discloses an example of an algorithm executed by a receiver according to a second mode of realization of the present invention;
Fig. 7 represents the relationship between coded bits and modulation symbols;
Fig. 8 discloses an example of an algorithm executed by a receiver according to a third mode of realization of the present invention;
Fig. 9 discloses an example of an algorithm executed by a receiver according to a fourth mode of realization of the present invention.

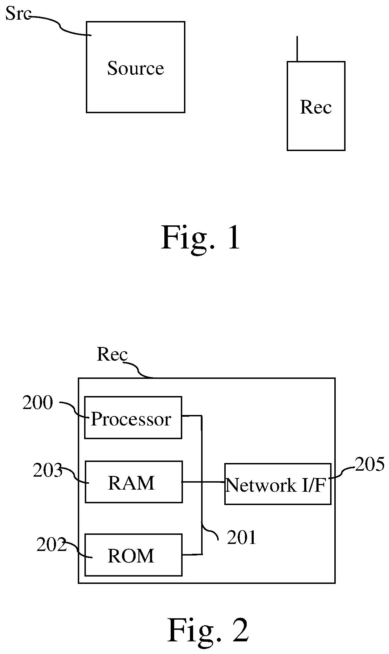

**Fig. 1** represents a link in which the present invention is implemented.

The signals transferred by a source Src are transferred to one or plural receivers Rec.

The link may be a wireless link or a wired link like used in power line communication.

A source Src may be included in a satellite or in a terrestrial transmitter like a base station or in a terminal like a mobile phone or in a relay.

Only one source Src is shown in the Fig. 1 for the sake of simplicity, but the link may comprise a more important number of sources Src.

Only one receiver Rec is shown in the Fig. 1 for the sake of simplicity, but signals may be broadcasted to a more important number of receivers Rec.

The receiver Rec may be a mobile terminal to which data like video signals are broadcasted or a mobile terminal which is in communication with a remote telecommunication device like a mobile phone or with a server or a base station or a home base station which receives signals from a mobile terminal or a relay.

According to the invention, the receiver:

- determines a first matrix with size PxL, L being the number of taps assumed in the channel impulse response and determining a Discrete Fourier Transform matrix of size PxP,
- demodulates the received signals representative of data symbols, in order to produce received data symbols,
- parallelizes the received data symbols,
- executes a Discrete Fourier Transform on the parallelized received data symbols,
- demaps the transformed received data symbols from the sub-carriers,
- estimates iteratively the channel impulse response from the demapped received data symbols, the channel estimation being dependent of the first matrix, the Discrete Fourier Transform matrix and of a second matrix which is defined according to a posteriori probabilities that the transferred data symbols are equal to possible modulation symbols of the modulation scheme.

**Fig. 2** is a diagram representing the architecture of a receiver in which the present invention is implemented.

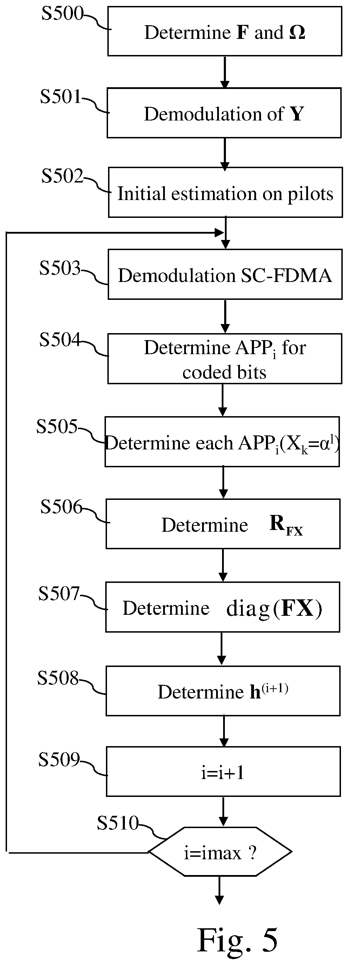

The receiver Rec has, for example, an architecture based on components connected together by a bus 201 and a processor 200 controlled by the program as disclosed in Fig. 5 or 6 or 8 or 9.

It has to be noted here that the receiver Rec may have an architecture based on dedicated integrated circuits.

The bus 201 links the processor 200 to a read only memory ROM 202, a random access memory RAM 203 and a network interface 205.

The memory 203 contains registers intended to receive variables and the instructions of the program related to the algorithm as disclosed in Fig. 5 or 6 or 8 or 9.

The processor 200 controls the operation of the network interface 205.

The read only memory 202 contains instructions of the program related to the algorithm as disclosed in Fig. 5 or 6 or 8 or 9, which are transferred, when the receiver Rec is powered on, to the random access memory 203.

The network interface 205 comprises means for transferring multiplexed data symbols and pilot sequences according to the invention to receivers Rec.

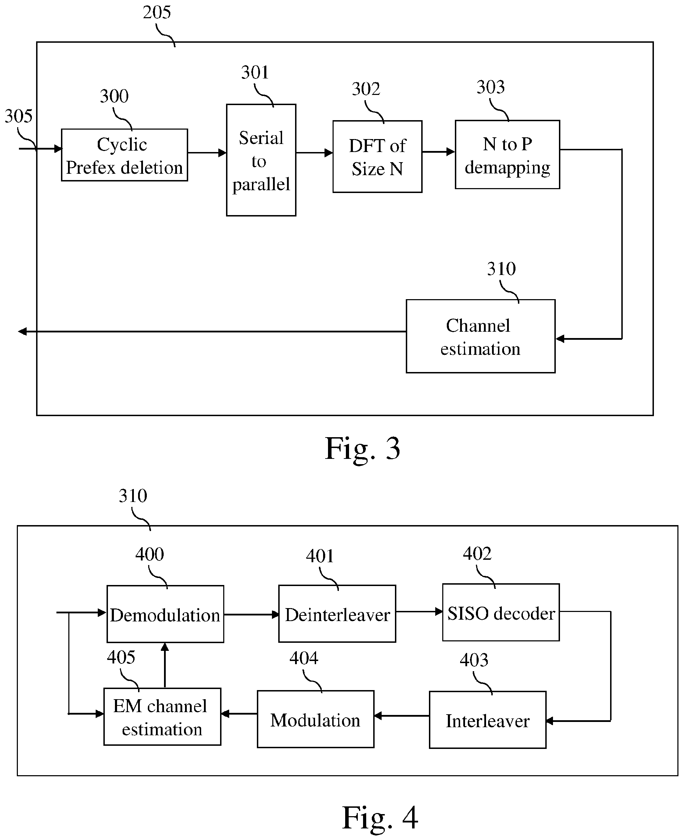

The network interface 205 comprises components as disclosed in Fig. 3.

**Fig. 3** discloses a block diagram of components of a network interface of the receiver according to the present invention.

In SC-FDMA, data to be transmitted are coded and organized as data symbols by a coding and modulation module giving a set of data symbols. Data symbols are converted from serial to parallel and spread in the frequency domain by a DFT (Discrete Fourier Transform). The data symbols spread in the frequency domain are mapped on sub-carriers comprised in the allocated frequency band. The symbols outputted after the frequency mapping are transformed back in the time domain by a IDFT (Inverse Discrete Fourier Transform) module and parallel to serial converted.

An optional cyclic prefix insertion module can be applied before transmission.

At least one signal 305 is received from at least one receive antenna. The received signal is synchronized by a synchronization module not shown in Fig. 3.

The optional cyclic prefix removal module 300 removes the cyclic prefix, if needed, from the synchronized signal.

The serial to parallel module 301 parallelizes the received signal.

The DFT module 302 executes a DFT of size N on the parallelized signal.

The signals provided by the DFT module 302 are demapped from N to P if the number of allocated subcarriers is equal to P, N being the total amount of available subcarriers. It is has to noted here that, for simplification purpose, P is taken equal to N in the following.

Demapped symbols are transferred to the channel estimation module 310 according to the present invention.

The channel estimation module 310 is described in reference to Fig. 4.

**Fig. 4** discloses a block diagram of components of a channel estimation module according to the present invention.

The demodulation module 400 demodulates the received symbols into a stream of observations on coded bits. The demodulation module 400 performs also an equalization and an inverse DTF.

The observations on coded bits are deinterleaved, if needed, by a deinterleaver module 401. The bits are interleaved in order to make the soft information on two adjacent bits in a codeword as much independent as possible.

The coded bits are decoded by a soft-input soft-output (SISO) module 402 which provides a posteriori probabilities of coded bits.

The output of the SISO module is interleaved by the interleaver 403 if needed and modulated by the modulation module 404 in order to provide a posteriori probabilities of data symbols.

The a posteriori probabilities of data symbols are then provided to the EM channel estimation module 405 as a priori information, according to the present invention.

EM channel estimation module 405 provides a recursive solution to maximum-likelihood (ML) estimation.

The channel impulse response is sampled at a given sampling frequency. Each sample of the channel impulse response is called a tap.

According to the invention the channel impulse response, which is a L size vector composed of L taps, at iteration i+1 is:

$$\mathbf{h}^{(i+1)} = \left( \mathbf{\Omega}^{\dagger} \mathbf{R_{FX}} \mathbf{\Omega} \right)^{-1} \mathbf{\Omega}^{\dagger} \mathrm{diag}(\mathbf{FX})^{\dagger} \mathbf{Y}$$

where $\Omega$ is a matrix with size PxL, built from the L first columns of a non-normalized DFT matrix $\Omega^{N}$ with size NxN, N being the number of available sub-carriers of the frequency band and L the number of taps assumed in the channel impulse response:

$$\mathbf{\Omega}^{N} = \begin{pmatrix} 1 & 1 & \cdots & 1 \\ 1 & e^{-j2\pi\frac{1}{N}} & \cdots & e^{-j2\pi\frac{N-1}{N}} \\ \vdots & \vdots & \ddots & \vdots \\ 1 & e^{-j2\pi\frac{N-1}{N}} & \cdots & e^{-j2\pi\frac{(N-1)(N-1)}{N}} \end{pmatrix}_{N \times N}$$

$$\Omega = \begin{pmatrix} 1 & 1 & \cdots & 1 \\ 1 & e^{-j2\pi\frac{1}{N}} & \cdots & e^{-j2\pi\frac{L-1}{N}} \\ \vdots & \vdots & \ddots & \vdots \\ 1 & e^{-j2\pi\frac{N-1}{N}} & \cdots & e^{-j2\pi\frac{(L-1)(N-1)}{N}} \end{pmatrix}_{N \times L}$$

It has to be noted here that $\Omega$ is given in an exemple where P=N.
The elements of $\Omega$ are

$$\Omega_{k,l} = e^{-j2\pi\frac{kl}{N}}$$

$(.)^{\dagger}$ denotes the transpose conjugate of $(.)$, diag$(.)$ denotes a diagonal matrix, in which vector $(.)$ is the diagonal and **Y** is the size-P vector of the observations on modulation symbols, observed after module 303.
If P<N, only the lines of the matrix $\Omega$ corresponding to allocated subcarriers will be selected in order to form a new matrix $\Omega$. For the rest of the description, P is considered to be equal to N.

$$\mathrm{diag}(\mathbf{FX}) = \sum_{\boldsymbol{\alpha}} \mathrm{APP}_i(\mathbf{X} = \boldsymbol{\alpha})\mathrm{diag}(\mathbf{F\boldsymbol{\alpha}})$$

where $\alpha = (\alpha_0, ..., \alpha_{P-1})^{\mathrm{T}}$, **F** is the DFT matrix $\mathbf{F} = \Omega^{\mathrm{P}}/\sqrt{\mathrm{P}}$, i.e. $\mathbf{F} = \Omega^{\mathrm{N}}/\sqrt{\mathrm{N}}$, **X** is a column vector containing the modulated symbols transferred by the source Src. $\alpha$ is a column vector containing plural possible modulated symbols, each possible modulation symbol belonging to the M possible modulation symbols.

$$\mathbf{R}_{\mathbf{FX}} = \sum_{\boldsymbol{\alpha}} \mathrm{APP}_i(\mathbf{X} = \boldsymbol{\alpha})\mathrm{diag}(\mathbf{F\boldsymbol{\alpha}})^{\dagger}\mathrm{diag}(\mathbf{F\boldsymbol{\alpha}})$$

APP$_i$(**X**=$\alpha$) is the a posteriori probability that **X** takes the value of the vector $\alpha$ in the i-th iteration. It will be written for the sake of simplification hereinafter APP$_i(\alpha)$.
According to the first mode of realization, a simplified computation of diag(**FX**) and **R**$_{\mathbf{FX}}$ is performed:

$$\mathrm{diag}(\mathbf{FX}) = \sum_{\boldsymbol{\alpha}} \mathrm{APP}_i(\boldsymbol{\alpha})\mathrm{diag}(\mathbf{F\boldsymbol{\alpha}}) = \mathrm{diag}\left(\sum_{\boldsymbol{\alpha}} \mathrm{APP}_i(\boldsymbol{\alpha}) \cdot (\mathbf{F\boldsymbol{\alpha}})\right)$$

Using the linearity property of the DFT, the equation is rewritten as:

$$\mathrm{diag}(\mathbf{FX}) = \mathrm{diag}\left(\mathbf{F}\left(\sum_{\boldsymbol{\alpha}} \mathrm{APP}_i(\boldsymbol{\alpha}) \cdot \boldsymbol{\alpha}\right)\right) = \mathrm{diag}\left(\mathbf{F\overline{X}}\right)$$

$$\mathbf{\overline{X}} = \sum_{\boldsymbol{\alpha}} \mathrm{APP}_i(\boldsymbol{\alpha}) \cdot \boldsymbol{\alpha}$$

If we consider the element k of **X,** we have:

$$X_k = \left( \sum_{\boldsymbol{\alpha}} \mathrm{APP}_i(\boldsymbol{\alpha}) \cdot \boldsymbol{\alpha} \right)_k = \sum_{\alpha_0 \cdots \alpha_{P-1}} \mathrm{APP}(\alpha_0) \ldots \mathrm{APP}(\alpha_{P-1}) \alpha_k$$

$$= \sum_{\alpha^l} \mathrm{APP}_i(X_k = \alpha^l) \alpha^l = \sum_{l=0}^{M-1} \mathrm{APP}(X_k = \alpha^l) . \alpha^l$$

where $\alpha^l$ is the l-th modulation symbol for a given modulation.

For example, if the modulation is a Quadrature Phase-Shift Keying (QPSK) modulation, $\alpha^0$=1+j, $\alpha^1$=1-j, $\alpha^2$=-1-j and $\alpha^3$=-1+j.

$\alpha_0$ is selected among $\alpha^0$, $\alpha^1$, $\alpha^2$ and $\alpha^3$. $\alpha_1$ is selected among $\alpha^0$, $\alpha^1$, $\alpha^2$ and $\alpha^3$, $\alpha_2$ is selected among $\alpha^0$, $\alpha^1$, $\alpha^2$ and $\alpha^3$ and $\alpha_3$ is selected among $\alpha^0$, $\alpha^1$ $\alpha^2$ and $\alpha^3$.

Thus, each element of the vector $\mathbf{X}$ can be easily calculated by the expression. The complexity of this diag($\mathbf{FX}$) is then reduced a lot and can be implemented in a receiver like a mobile phone or a home base station.

$\mathbf{R_{FX}}$ can be also simplified :

$$\mathbf{R_{FX}} = \sum_{\boldsymbol{\alpha}} \mathrm{APP}_i(\boldsymbol{\alpha}) \mathrm{diag}(\mathbf{F}\boldsymbol{\alpha})^{\dagger} \mathrm{diag}(\mathbf{F}\boldsymbol{\alpha}) = \sum_{\boldsymbol{\alpha}} \mathrm{APP}_i(\boldsymbol{\alpha}) \mathrm{diag}\left( \left| (\mathbf{F}\boldsymbol{\alpha})_k \right|^2 \right)_{P \times P}$$

where diag($V_k$)$_{P \times P}$ denotes the diagonal matrix of size PxP carrying elements $V_0$ to $V_{P-1}$ on its diagonal. The vector of elements $|(\mathbf{F}\alpha)_k|^2$ can be expressed as the diagonal of matrix $\mathbf{F}\alpha\alpha^{\dagger}\mathbf{F}^{\dagger}$, i.e.,

$$\left( \left| (\mathbf{F}\boldsymbol{\alpha})_0 \right|^2, \ldots, \left| (\mathbf{F}\boldsymbol{\alpha})_{P-1} \right|^2 \right)^{T} = \mathrm{diagM}\left( \mathbf{F}\boldsymbol{\alpha}\boldsymbol{\alpha}^{\dagger}\mathbf{F}^{\dagger} \right)$$

where diagM ($\mathbf{A}$) corresponds to a vector made of the elements of the diagonal of the matrix $\mathbf{A}$.

Thus,

$$\mathbf{R_{FX}} = \sum_{\boldsymbol{\alpha}} \mathrm{APP}_i(\boldsymbol{\alpha}) \mathrm{diag}\left( \mathrm{diagM}\left( \mathbf{F}\boldsymbol{\alpha}\boldsymbol{\alpha}^{\dagger}\mathbf{F}^{\dagger} \right) \right) = \mathrm{diag}\left( \sum_{\boldsymbol{\alpha}} \mathrm{APP}_i(\boldsymbol{\alpha}) \mathrm{diagM}\left( \mathbf{F}\boldsymbol{\alpha}\boldsymbol{\alpha}^{\dagger}\mathbf{F}^{\dagger} \right) \right)$$

$$= \mathrm{diag}\left( \mathrm{diagM}\left( \sum_{\boldsymbol{\alpha}} \mathrm{APP}_i(\boldsymbol{\alpha}) \left( \mathbf{F}\boldsymbol{\alpha}\boldsymbol{\alpha}^{\dagger}\mathbf{F}^{\dagger} \right) \right) \right) = \mathrm{diag}\left( \mathrm{diagM}\left( \mathbf{F}\left( \sum_{\boldsymbol{\alpha}} \mathrm{APP}_i(\boldsymbol{\alpha}) \boldsymbol{\alpha}\boldsymbol{\alpha}^{\dagger} \right) \mathbf{F}^{\dagger} \right) \right)$$

$$= \mathrm{diag}\left( \mathrm{diagM}\left( \mathbf{FRF}^{\dagger} \right) \right)$$

where

$$\mathbf{R} = \sum_{\boldsymbol{\alpha}} \mathrm{APP}_i(\boldsymbol{\alpha}) \left( \boldsymbol{\alpha}\boldsymbol{\alpha}^{\dagger} \right)$$

Thus, matrix $\mathbf{R_{FX}}$ is a diagonal matrix with the same diagonal as matrix $\mathbf{FRF}^{\dagger}$, which is non-diagonal. In other words, $\mathbf{R_{FX}}$ is the matrix $\mathbf{FRF}^{\dagger}$ ignoring the non-diagonal terms.

The terms of matrix $\mathbf{R}$ are calculated as:

$$R_{k,k} = \sum_{\alpha_0 \cdots \alpha_{P-1}} \mathrm{APP}_i(X_0 = \alpha_0) \cdots \mathrm{APP}_i(X_{P-1} = \alpha_{P-1}) \left| \alpha_k \right|^2 = \sum_{l=0}^{M-1} \mathrm{APP}_i(X_k = \alpha^l) \left| \alpha^l \right|^2$$

and

$$R_{l,j} = \sum_{\alpha} APP_i(\alpha) \cdot \alpha_l \alpha_j^*$$

$$= \sum_{y=0}^{M-1} \sum_{x=0}^{M-1} APP_i(X_l = \alpha^x) \cdot APP_i(X_j = \alpha^y) \cdot \alpha^x \alpha^{y*} \quad for \quad l \neq j$$

According to a particular mode of the first mode of realization, in order to further reduce the complexity, instead of calculating all elements of **FRF**$^\dagger$, only the diagonal elements need to be calculated.

$$\left(\mathbf{FRF}^\dagger\right)_{j,j} = \sum_{k=0}^{P-1} \sum_{l=0}^{P-1} R_{k,l} F_{j,k} F_{j,l}^*$$

As R is hermitian:

$$\left(\mathbf{FRF}^\dagger\right)_{j,j} = \sum_{k=0}^{P-1} \left( \left( \sum_{l<k} 2 \cdot Re\left\{ R_{k,l} F_{j,k} F_{j,l}^* \right\} \right) + \left( R_{k,k} \left| F_{j,k} \right|^2 \right) \right)$$

$F_{j,k} F_{j,l}^*$ and $|F_{j,k}|^2 = 1/P$ are constant terms and can be stored in a lookup table.

According to the second mode of realization of the present invention:

$$h_l^{(i+1)} = \frac{\sum_{k=0}^{P-1} \sum_{\alpha} (\mathbf{F\alpha})_k^* \Omega_{k,l}^* \left[ h_l^{(i)} (\mathbf{F\alpha})_k \Omega_{k,l} + \beta_l \left( Y_k - \sum_{l'=0}^{L-1} h_l^{(i)} (\mathbf{F\alpha})_k \Omega_{k,l'} \right) \right] APP_i(\alpha)}{\sum_{k=0}^{P-1} \sum_{\alpha} \left| (\mathbf{F\alpha})_k \right|^2 APP_i(\alpha)}$$

where $\beta_l$ with l=0 to L-1 is a predetermined set of real coefficients that are constants. The coefficients may be different from each other. Their sum is preferably equal to one and preferably they are all equal to 1/L.

The denominator is the trace of **R$_{FX}$** = diag (diagM (**FRF**$^\dagger$)).

The numerator is the sum of three terms A$_l$+B$_l$+C$_l$ with

$$A_l = \sum_{k=0}^{P-1} \sum_{\alpha} (\mathbf{F\alpha})_k^* \Omega_{k,l}^* h_l^{(i)} (\mathbf{F\alpha})_k \Omega_{k,l} APP_i(\alpha)$$

$$= h_l^{(i)} \sum_{k=0}^{P-1} \sum_{\alpha} \left| (\mathbf{F\alpha})_k \right|^2 APP_i(\alpha) = h_l^{(i)} Trace\left( \mathbf{R_{FX}} \right)$$

$$B_l = \sum_{k=0}^{P-1} \sum_{\alpha} (\mathbf{F\alpha})_k^* \Omega_{k,l}^* \beta_l Y_k APP_i(\alpha)$$

$$= \beta_l \sum_{k=0}^{P-1} \Omega_{k,l}^* Y_k \sum_{\alpha} (\mathbf{F\alpha})_k^* APP_i(\alpha) = \beta_l \sum_{k=0}^{P-1} \Omega_{k,l}^* Y_k \left( \mathbf{FX} \right)_k^*$$

$$C_l = -\sum_{k=0}^{P-1} \sum_{\alpha} (\mathbf{F}\alpha)_k^* \Omega_{k,l}^* \beta_l \sum_{l'=0}^{L-1} h_{l'}^{(i)} (\mathbf{F}\alpha)_k \Omega_{k,l'} \, APP_i(\alpha)$$

$$= -\beta_l \sum_{k=0}^{P-1} \Omega_{k,l}^* H_k \sum_{\mathbf{X}} \left| (\mathbf{F}\alpha)_k \right|^2 APP_i(\alpha)$$

$$= -\beta_l \sum_{k=0}^{P-1} \Omega_{k,l}^* H_k \left( \mathbf{FRF}^\dagger \right)_{k,k}$$

where

$$H_k = \sum_{l'} h_{l'}^{(i)} \Omega_{k,l'} \; .$$

**Fig. 5** discloses an example of an algorithm executed by a receiver according to a first mode of realization of the present invention.

More precisely, the algorithm is executed by the processor 200 of the receiver Rec or by the wireless interface 205 of the receiver Rec.

The present algorithm is executed periodically, for example every 71 microseconds or every millisecond.

During the iterative process, the link between the source Src and the receiver Rec, or in other words the channel impulse response, is determined only from received data symbols.

At step S500, the non-normalized DFT matrix $\Omega$ with size PxL, the DFT matrix **F** are determined and a variable i is set to null value.

At next step S501, the received symbols are demodulated in order to produce vector **Y.** At the same step, cyclic prefix may be removed, a serial to parallel conversion is performed and a demapping is performed.

At next step S502, an initial estimation of the channel is executed.

The initial estimation is performed, for instance on pilot symbols, by a usual non-iterative estimation method, such as a least-square (LS) estimation or a minimum mean square channel (MMSE) estimation.

At next step S503, a demodulation of the SC-FDMA symbols is performed. At that step, an equalization and an inverse DFT are also performed.

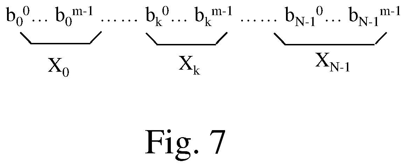

At next step S504, a posteriori probabilities $APP_i(b)$ of each coded bit b are determined. The coded bits are disclosed in Fig. 7.

**Fig. 7** represents the relationship between coded bits and modulation symbols.

The coded bits are grouped into modulation symbols $X_0..., X_k,...X_{P-1}$.

The symbol $X_0$ comprises the bits $b_0^0$ to $b_0^{m-1}$, the symbol $X_k$ comprises the bits $b_k^0$ to $b_K^{m-1}$ and the symbol $X_{P-1}$ comprises the bits $b_{P-1}^0$ to $b_{P-1}^{m-1}$ if the modulation scheme under use comprises $M=2^m$ symbols.

For each bit, a posteriori probability that bit b equals one value, i.e. $APP_i(b=1)$, and a posteriori probability that bit b equals null value, i.e. $APP_i(b=0)$, are determined.

According to the example of Quadrature Phase-Shift Keying modulation:

$\alpha^0$ is represented by bits $b_k^0 =0$ and $b_k^1=0$,
$\alpha^1$ is represented by bits $b_k^0 =0$ and $b_k^1=1$,
$\alpha^2$ is represented by bits $b_k^0 =1$ and $b_k^1=1$,
$\alpha^3$ is represented by bits $b_k^0 =1$ and $b_k^1=0$.

At next step S505, a posteriori probability $APP_i(X_k=\alpha^1)$ of each data symbol $X_k$ with k=0 to P-1 is determined.

The a posteriori probability $APP_i(X_k=\alpha^1)$ of each data symbol $X_k$ with k=0 to P-1 is determined for each possible modulation symbol value $\alpha^l$ with l=0 to M-1 from the a posteriori probabilities of coded bits.

$$APP_i(X_k = \alpha^l) = \prod_{x=0}^{m-1} APP_i(b_k^x)$$

According to the example of Quadrature Phase-Shift Keying modulation:

$$APP_i(X_k = \alpha^0) = APP_i(b_k^0 = 0) * APP_i(b_k^1 = 0),$$

$$APP_i(X_k = \alpha^1) = APP_i(b_k^0 = 0) * APP_i(b_k^1 = 1),$$

$$APP_i(X_k = \alpha^2) = APP_i(b_k^0 = 1) * APP_i(b_k^1 = 1),$$

$$APP_i(X_k = \alpha^3) = APP_i(b_k^0 = 1) * APP_i(b_k^1 = 0).$$

At next step S506, the matrix $\mathbf{R_{FX}}$ is determined.

$$\mathbf{R_{FX}} = \text{diag}\left(\text{diagM}\left(\mathbf{FRF}^\dagger\right)\right)$$

The terms of matrix $\mathbf{R}$ are calculated as:

$$R_{k,k} = \sum_{l=0}^{M-1} APP_i(X_k = \alpha^l)\left|\alpha^l\right|^2$$

and

$$R_{l,j} = \sum_{y=0}^{M-1}\sum_{x=0}^{M-1} APP_i(X_l = \alpha^x)\cdot APP_i(X_j = \alpha^y)\cdot\alpha^x\alpha^{y*} \quad \text{for} \quad l \neq j$$

As $\mathbf{R}$ is hermitian:

$$\left(\mathbf{FRF}^\dagger\right)_{j,j} = \sum_{k=0}^{P-1}\left(\left(\sum_{l<k} 2\cdot\text{Re}\left\{R_{k,l}F_{j,k}F_{j,l}^*\right\}\right) + \left(R_{k,k}\left|F_{j,k}\right|^2\right)\right)$$

$F_{j,k}F_{j,l}^*$ and $|F_{j,k}|^2 = 1/P$ are constant terms and can be stored in a lookup table.

At next step S507, diag(**FX**) is determined.

$$\text{diag}(\mathbf{FX}) = \text{diag}\left(\mathbf{FX}\right)$$

The elements $\mathbf{X}$ are calculated as:

$$X_k = \sum_{l=0}^{M-1} APP(X_k = \alpha^l).\alpha^l.$$

At next step S508, the channel impulse response at iteration i+1 is determined.

$$\mathbf{h}^{(i+1)} = \left(\mathbf{\Omega}^{\dagger} \mathbf{R}_{\mathbf{FX}} \mathbf{\Omega}\right)^{-1} \mathbf{\Omega}^{\dagger} \mathrm{diag}\left(\mathbf{FX}\right)^{\dagger} \mathbf{Y}$$

At next step S509, the variable i is incremented.

At next step S510, the variable i is compared to a predetermined value imax which is for example comprised between three and ten.

The predetermined value imax is for example equal to eight.

If the variable i is lower than imax, the algorithm returns to step S503 in order to start the following iteration. Otherwise, the algorithm is interrupted.

The present algorithm is also applicable when pilot symbols are processed at the source by a DFT module in the same way as data symbols.

In that case, steps S504 and S505 are performed only for the data symbols and the a posteriori probability $\mathrm{APP}_i(X_p)$ of each pilot symbol $X_p$ is set to the value one for the symbol value equal to the pilot symbol and to the value zero for other symbol values as pilot symbol is known by the receiver Rec.

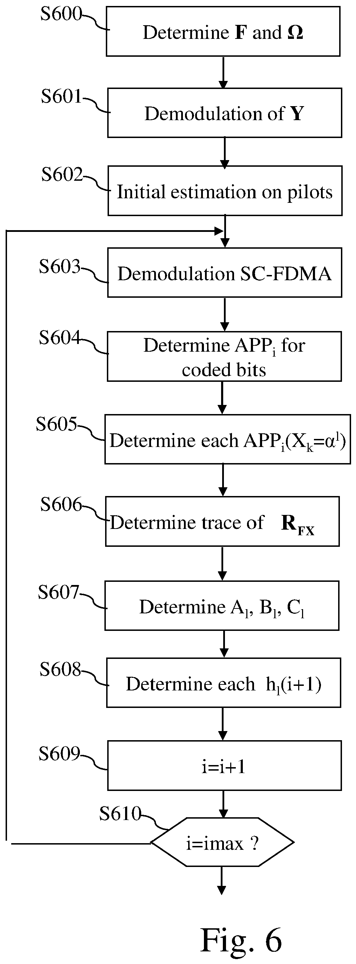

**Fig. 6** discloses an example of an algorithm executed by a receiver according to a second mode of realization of the present invention.

More precisely, the algorithm is executed by the processor 200 of the receiver Rec or by the wireless interface 205 of the receiver Rec.

The present algorithm is executed periodically, for example every 71 microseconds or every millisecond.

During the iterative process, the link between the source Src and the receiver Rec or in other words the channel impulse response, is determined only from received data symbols.

At step S600, the non-normalized DFT matrix $\Omega$ with size PxL, the DFT matrix **F** are determined and a variable i is set to null value.

At next step S601, the received data symbols are demodulated in order to produce vector **Y.** At the same step, cyclic prefix may be removed, a serial to parallel conversion is performed and a demapping is performed.

At next step S602, an initial estimation of the channel is executed, for instance on pilot symbols.

The initial estimation is performed by a usual non-iterative estimation method, such as a least-square (LS) estimation or a minimum mean square channel (MMSE) estimation.

At next step S603, a demodulation of the SC-FDMA symbols is performed. At that step, an equalization and an inverse DFT are also performed.

At next step S604, a posteriori probabilities $\mathrm{APP}_i(b)$ of each coded bit b are determined. The coded bits are disclosed in Fig. 7.

For each bit, a posteriori probability that bit b equals one value i.e. $\mathrm{APP}_i(b=1)$ and a posteriori probability that bit b equals null value, i.e. $\mathrm{APP}_i(b=0)$, are determined.

According to the example of Quadrature Phase-Shift Keying modulation:

$\alpha^0$ is represented by bits $b_k{}^0 = 0$ and $b_k{}^1 = 0$
$\alpha^1$ is represented by bits $b_k{}^0 = 0$ and $b_k{}^1 = 1$,
$\alpha^2$ is represented by bits $b_k{}^0 = 1$ and $b_k{}^1 = 1$,
$\alpha^3$ is represented by bits $b_k{}^0 = 1$ and $b_k{}^1 = 0$.

At next step S605, a posteriori probability $\mathrm{APP}_i(X_k = \alpha^1)$ of each data symbol $X_k$ with k=0 to P-1 is determined.

The a posteriori probability $\mathrm{APP}_i(X_k = \alpha^1)$ of each data symbol $X_k$ with k=0 to P-1 is determined for each possible modulation symbol value $\alpha^1$ with l=0 to M-1 from the a posteriori probabilities of coded bits.

$$\mathrm{APP}_i(X_k = \alpha^1) = \prod_{x=0}^{m-1} \mathrm{APP}_i(b_k^x) \,.$$

According to the example of Quadrature Phase-Shift Keying modulation:

$$\mathrm{APP}_i(X_k = \alpha^0) = \mathrm{APP}_i(b_k^0 = 0) * \mathrm{APP}_i(b_k^1 = 0) \,,$$

$$APP_i(X_k = \alpha^1) = APP_i(b_k^0 = 0) * APP_i(b_k^1 = 1),$$

$$APP_i(X_k = \alpha^2) = APP_i(b_k^0 = 1) * APP_i(b_k^1 = 1),$$

$$APP_i(X_k = \alpha^3) = APP_i(b_k^0 = 1) * APP_i(b_k^1 = 0).$$

At next step S606, the trace Trace($\mathbf{R_{FX}}$) of matrix $\mathbf{R_{FX}}$ is determined.

$\mathbf{R_{FX}} =$ diag (diagM($\mathbf{FRF^\dagger}$)) as disclosed at step S506.

At next step S607, three terms $A_l$, $B_l$, and $C_l$ are determined for each l=0 to L-1.

$$A_l = h_l^{(i)} \mathrm{Trace}\left(\mathbf{R_{FX}}\right)$$

$$B_l = \beta_l \sum_{k=0}^{P-1} \Omega_{k,l}^* Y_k \left(\mathbf{FX}\right)_k^*$$

$$C_l = -\beta_l \sum_{k=0}^{P-1} \Omega_{k,l}^* H_k \left(\mathbf{FRF^\dagger}\right)_{k,k}$$

where

$$H_k = \sum_{l'} h_{l'}^{(i)} \Omega_{k,l'} .$$

At next step S608, each channel impulse response with l=0 to L-1 at iteration i+1 is determined.

$$h_l^{(i+1)} = \frac{A_l + B_l + C_l}{\mathrm{Trace}(\mathbf{R_{FX}})}$$

The denominator is the trace of $\mathbf{R_{FX}}$.

The numerator is the sum of three terms $A_1 + B_1 + C_1$.

At next step S609, the variable i is incremented.

At next step S610, the variable i is compared to a predetermined value imax which is for example comprised between three and ten.

The predetermined value imax is for example equal to eight.

If the variable i is lower than imax, the algorithm returns to step S603 in order to start the following iteration. Otherwise, the algorithm is interrupted.

The present algorithm is also applicable when pilot symbols are processed at the source by a DFT module in the same way as data symbols.

In that case steps S504 and S505 are performed only for the data symbols and the a posteriori probability $APP_i(X_p)$ of each pilot symbol $X_p$ is set to the value one for the symbol value equal to the pilot symbol and to the value zero for other symbol values as pilot symbol is known by the receiver Rec.

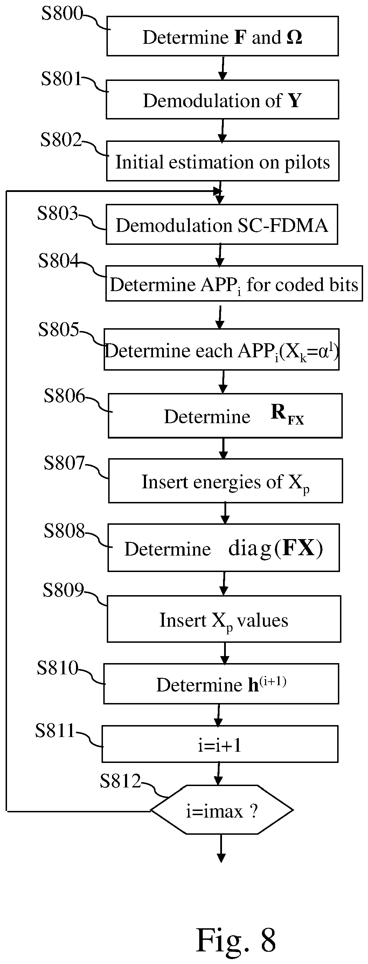

**Fig. 8** discloses an example of an algorithm executed by a receiver according to an example of realization of the present invention.

The present algorithm is executed periodically, for example every 71 microseconds or every millisecond.

The present algorithm differs from the algorithm of Fig. 5 in the sense that during the iterative process, the link between the source Src and the receiver Rec or in other word the channel impulse response is determined from received pilot symbols and from received data symbols and the pilot symbols are not processed at the source by a DFT module as data symbols and are individually mapped onto subcarriers.

At step S800, the non-normalized DFT matrix Ω with size P=($N_d$+ $N_p$) multiplied by L is determined on the $N_d$ subcarriers on which data symbols are mapped and on $N_p$ subcarriers on which pilot symbols are mapped, the DFT matrix **F** is determined with a size $N_d$ x $N_d$ and a variable i is set to null value.

At next step S801, the received data symbols and pilot symbols are demodulated in order to produce vector Y. At the same step, cyclic prefix may be removed, a serial to parallel conversion is performed and a demapping is performed.

At next step S802, an initial estimation of the channel is executed.

The initial estimation is performed, for instance on pilot symbols, by a usual non-iterative estimation method, such as a least-square (LS) estimation or a minimum mean square channel (MMSE) estimation.

At next step S803, a demodulation of the SC-FDMA data symbols is performed. At that step, an equalization and an inverse DFT are also performed.

At next step S804, a posteriori probabilities $APP_i(b)$ of each coded bit b are determined. The coded bits are disclosed in Fig. 7.

For each bit, a posteriori probability that bit b equals one value, i.e. $APP_i(b=1)$, and a posteriori probability that bit b equals null value, i.e. $APP_i(b=0)$, are determined.

According to the example of Quadrature Phase-Shift Keying modulation:

$\alpha^0$ is represented by bits $b_k^0$ =0 and $b_k^1$=0

$\alpha^1$ is represented by bits $b_k^0$ =0 and $b_k^1$=1,

$\alpha^2$ is represented by bits $b_k^0$ =1 and $b_k^1$=1,

$\alpha^3$ is represented by bits $b_k^0$ =1 and $b_k^1$=0.

At next step S805, a posteriori probability $APP_i(X_k=\alpha^1)$ of each data symbol $X_k$ with k=0 to $N_d$-1 is determined.

The a posteriori probability $APP_i(X_k=\alpha^1)$ of each data symbol $X_k$ with k=0 to $N_d$-1 is determined for each possible modulation symbol value $\alpha^1$ with l=0 to M-1 from the a posteriori probabilities of coded bits.

$$APP_i(X_k = \alpha^1) = \prod_{x=0}^{m-1} APP_i(b_k^x)$$

According to the example of Quadrature Phase-Shift Keying modulation:

$$APP_i(X_k = \alpha^0) = APP_i(b_k^0 = 0) * APP_i(b_k^1 = 0),$$

$$APP_i(X_k = \alpha^1) = APP_i(b_k^0 = 0) * APP_i(b_k^1 = 1),$$

$$APP_i(X_k = \alpha^2) = APP_i(b_k^0 = 1) * APP_i(b_k^1 = 1),$$

$$APP_i(X_k = \alpha^3) = APP_i(b_k^0 = 1) * APP_i(b_k^1 = 0).$$

At next step S806, the matrix $\mathbf{R_{FX}}$ is determined.

$$\mathbf{R_{FX}} = \text{diag}\left(\text{diagM}\left(\mathbf{FRF}^\dagger\right)\right)$$

The terms of matrix **R** are calculated as:

$$R_{k,k} = \sum_{l=0}^{M-1} APP_i(X_k = \alpha^l)\left|\alpha^l\right|^2$$

and

$$R_{l,j} = \sum_{y=0}^{M-1}\sum_{x=0}^{M-1} APP_i(X_l = \alpha^x) \cdot APP_i(X_j = \alpha^y) \cdot \alpha^x \alpha^{y*} \quad \text{for} \quad l \neq j$$

At next step S807, a new matrix is formed. The new matrix $\mathbf{R_{X'}}$ comprises the matrix $\mathbf{R_{FX}}$ and new lines at positions of subcarriers on which pilot symbols are mapped. For each received pilot symbol $X_p$, the energy value $|X_p|^2$ of the received pilot symbol $X_p$ is inserted in the line at element position corresponding to the diagonal of the new matrix $\mathbf{R_{X'}}$.

At next step S808, diag(**FX**) is determined as disclosed as step S507.

At next step S809, a new diagonal matrix diag(**X'**) is formed. diag(**X'**) takes values of diag(**FX**) on lines on which data symbols are mapped and pilot symbols $X_p$ on lines on which pilot symbols are mapped.

At next step S810, the channel impulse response at iteration i+1 is determined.

$$\mathbf{h}^{(i+1)} = \left(\mathbf{\Omega}^\dagger \mathbf{R_{X'}}\mathbf{\Omega}\right)^{-1}\mathbf{\Omega}^\dagger \text{diag}(\mathbf{X'})^\dagger \mathbf{Y}$$

At next step S 811, the variable i is incremented.

At next step S812, the variable i is compared to a predetermined value imax which is for example comprised between three and ten.

The predetermined value imax is for example equal to eight.

If the variable i is lower than imax, the algorithm returns to step S803 in order to start the following iteration. Otherwise, the algorithm is interrupted.

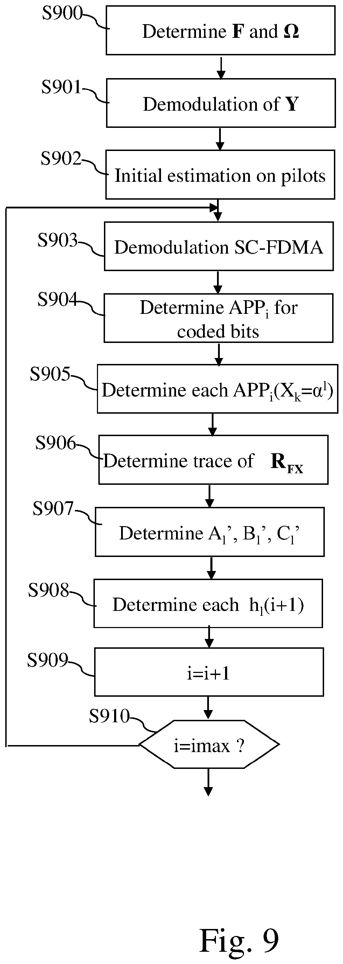

**Fig. 9** discloses an example of an algorithm executed by a receiver according to a third mode of realization of the present invention.

The present algorithm is executed periodically, for example every 71 microseconds or every millisecond.

The present algorithm differs from the algorithm of Fig. 6 in the sense that during the iterative process, the link between the source Src and the receiver Rec or in other words the channel impulse response is determined from received pilot symbols and from received data symbols and the pilot symbols are not processed at the source by a DFT module as data symbols and are individually mapped onto subcarriers.

At step S900, the non-normalized DFT matrix $\Omega$ with size PxL is determined on the $N_d$ subcarriers on which data are mapped and on $N_p$ subcarriers on which pilot symbols are mapped, the DFT matrix **F** is determined with size $N_d$ x $N_d$ and a variable i is set to null value.

At next step S901, the received data symbols and pilot symbols are demodulated in order to produce vector **Y.** At the same step, cyclic prefix may be removed, a serial to parallel conversion is performed and a demapping is performed.

At next step S902, an initial estimation of the channel is executed.

The initial estimation is performed, for instance on pilot symbols, by a usual non-iterative estimation method, such as a least-square (LS) estimation or a minimum mean square channel estimation.

At next step S903, a demodulation of the SC-FDMA symbols is performed. At that step, an equalization and an inverse DFT are also performed.

At next step S904, a posteriori probabilities $APP_i(b)$ of each coded bit b are determined. The coded bits are disclosed in Fig. 7.

For each bit, a posteriori probability that bit b equals one value, i.e. $APP_i(b=1)$, and a posteriori probability that bit b equals null value, i.e. $APP_i(b=0)$, are determined.

According to the example of Quadrature Phase-Shift Keying modulation:

$\alpha^0$ is represented by bits $b_k{}^0 = 0$ and $b_k{}^1 = 0$
$\alpha^1$ is represented by bits $b_k{}^0 = 0$ and $b_k{}^1 = 1$,
$\alpha^2$ is represented by bits $b_k{}^0 = 1$ and $b_k{}^1 = 1$,
$\alpha^3$ is represented by bits $b_k{}^0 = 1$ and $b_k{}^1 = 0$.

At next step S905, a posteriori probability $APP_i(X_k=\alpha^1)$ of each data symbol $X_k$ with k=0 to $N_d$-1 is determined.

The a posteriori probability $APP_i(X_k=\alpha^1)$ of each data symbol $X_k$ with k=0 to $N_d$-1 is determined for each possible modulation symbol value $\alpha^1$ with l=0 to M-1 from the a posteriori probabilities of coded bits.

$$APP_i(X_k = \alpha^1) = \prod_{x=0}^{m-1} APP_i(b_k^x).$$

According to the example of Quadrature Phase-Shift Keying modulation:

$$APP_i(X_k = \alpha^0) = APP_i(b_k^0 = 0) * APP_i(b_k^1 = 0),$$

$$APP_i(X_k = \alpha^1) = APP_i(b_k^0 = 0) * APP_i(b_k^1 = 1),$$

$$APP_i(X_k = \alpha^2) = APP_i(b_k^0 = 1) * APP_i(b_k^1 = 1),$$

$$APP_i(X_k = \alpha^3) = APP_i(b_k^0 = 1) * APP_i(b_k^1 = 0).$$

At next step S906, the trace of matrix $\mathbf{R_{FX}}$ is determined.

$$\mathbf{R_{FX}} = \mathrm{diag}\left(\mathrm{diagM}\left(\mathbf{FRF}^\dagger\right)\right)$$

At next step S907, three terms $A_l'$, $B_l'$, and $C_l'$ are determined.

$$A_l' = h_l^{(i)}\left(\mathrm{Trace}\left(\mathbf{FRF}^\dagger\right) + \sum_{j=0}^{N_p-1}\left|X_p\right|^2\right)$$

$$B_l' = \beta_l\left(\sum_{m=0}^{N_d-1} \Omega_{k_d(m),l}^* Y_{k_d(m)}\left(\mathbf{FX}\right)_m^* + \sum_{j=0}^{N_p-1} \Omega_{k_p(j),l}^* Y_{k_p(j)} X_p^*\right)$$

$$C_l' = -\beta_l\left(\sum_{m=0}^{N_d-1} \Omega_{k_d(m),l}^* H_{k_d(m)}\left(\mathbf{FRF}^\dagger\right)_{m,m} + \sum_{j=0}^{N_p-1} \Omega_{k_p(j),l}^* H_p\left|X_p\right|^2\right)$$

where $k_d(m)$ is the subcarrier of which the m-th data symbol is mapped and $k_p(j)$ is the subcarrier of which the j-th pilot symbol is mapped. At next step S908, each channel impulse response with 1=0 to L-1 at iteration i+1 is determined:

$$h_l^{(i+1)} = \frac{A_l' + B_l' + C_l'}{\mathrm{Trace}\left(\mathbf{FRF}^\dagger\right) + \sum_{j=0}^{N_p-1}\left|X_p\right|^2}$$

The denominator is the trace of $\mathbf{R_{FX}}$ plus the sum of the energies of the received pilot symbols.

The numerator is the sum of three terms $A_l'+B_l'+C_l'$.

At next step S909, the variable i is incremented.

At next step S910, the variable i is compared to a predetermined value imax which is for example comprised between three and ten.

The predetermined value imax is for example equal to eight.

If the variable i is lower than imax, the algorithm returns to step S903 in order to start the following iteration. Otherwise, the algorithm is interrupted.

Naturally, many modifications can be made to the embodiments of the invention described above without departing from the scope of the present invention.

**Claims**

1.  Method for estimating a channel impulse response between a source and a receiver, data transmitted by the source being coded and organized as data symbols, data symbols being converted from serial to parallel and spread in the frequency domain by a Discrete Fourier Transform, the data symbols spread by the Discrete Fourier Transform being mapped on P sub-carriers allocated for transmission among N sub-carriers of a frequency band, transformed back in the time domain by an Inverse Discrete Fourier Transform module, parallel to serial converted and transferred to the receiver under the form of signals representative of data symbols, the method comprising the steps, executed by the receiver of:

    - determining (E500) a first matrix with size *PxL, L* being the number of taps assumed in the channel impulse response and determining a Discrete Fourier Transform matrix of size *PxP* the first matrix being constituted of the first *L* columns of a *PxP* non-normalized Discrete Fourier Transform matrix,
    - demodulating the receiving the signals representative of data symbols,
    - (E501) serial to parallel converting, executing a Discrete Fourier Transform and demapping the parallel converted Discrete Fourier Transformed received signals, from *N* subcarriers to P subcarriers in order to produce demapped received data symbols,

    **characterized in that** the method comprises the step of:

    - estimating (S503 to S510) iteratively the channel impulse response from the demapped received data symbols, the channel estimation being dependent of the first matrix, the Discrete Fourier Transform matrix and of a second matrix which is defined according to *a posteriori* probabilities that the transferred data symbols are equal to possible modulation symbols of the modulation scheme, the denominator of the impulse channel response being at next iteration the trace of the second matrix which is a diagonal matrix, the elements of which being diagonal elements of a third matrix obtained from the Discrete Fourier Transform matrix and from a fourth matrix, the elements of the fourth matrix being equal to:

    $$R_{k,k} = \sum_{l=0}^{M-1} APP_i(X_k = \alpha^l)|\alpha^l|^2$$

    and

    $$R_{l,j} = \sum_{y=0}^{M-1}\sum_{x=0}^{M-1} APP_i(X_l = \alpha^x)\cdot APP_i(X_j = \alpha^y)\cdot \alpha^x \alpha^{y*} \quad \text{for} \quad l \neq j$$

    where APP$_i(X_k=\alpha^l)$ is the *a posteriori* probability that data symbol $X_k$ is equal to $\alpha^l$, $\alpha^l$ is the *l*-th modulation symbol of the possible modulation symbols, *M* is the total number of possible modulation symbols and (.)* denotes the conjugate of (.) and the the second matrix is equal to :

    $$R_{FX} = diag\left(diagM\left(F R F^\dagger\right)\right)$$

where $diag(.)$ denotes a diagonal matrix, in which vector (.) is the diagonal, $diagM(.)$ denotes a vector made of the elements of the diagonal of the matrix (.), $\mathbf{F}$ is the Discrete Fourier Transform matrix and $(.)^\dagger$ denotes the transpose conjugate of (.).

2. Method according to claim 1, **characterised in that** the channel impulse response at the $(i+1)$-th iteration is determined according to the following formula:

$$h_l^{(i+1)} = \frac{A_l + B_l + C_l}{Trace(\hat{\mathbf{R}}_{FX})}$$

where $A_l$, $B_l$, and $C_l$ are determined for each $l$=0 to $L$-1, $h_l^{(i)}$ is the $l$-th tap of the channel impulse response at the i-th iteration,

$$A_l = h_l^{(i)} Trace\left(\hat{\mathbf{R}}_{FX}\right)$$

$$B_l = \beta_l \sum_{k=0}^{P-1} \Omega_{k,l}^* Y_k \left(\mathbf{F}\hat{\mathbf{X}}\right)_k^*$$

$$C_l = -\beta_l \sum_{k=0}^{P-1} \Omega_{k,l}^* H_k \left(\mathbf{F}\hat{\mathbf{R}}\mathbf{F}^\dagger\right)_{k,k}$$

$$H_k = \sum_{l'} h_{l'}^{(i)} \Omega_{k,l'}$$
.

$\Omega_{k,l'}$ is the coefficient at $k$-th row and $l'$-th column of the first matrix $\Omega$, $Y_k$ is the $k$-th coefficient of a size $P$ vector of demapped received data symbols,
$(.)^\dagger$ denotes the transpose conjugate of (.) and $(.)^*$ denotes the conjugate of (.)

3. Method according to claim 1, **characterised in that** the source further transfers pilot symbols spread in the frequency domain by the Discrete Fourier Transform and the receiver sets the *a posteriori* probability of each pilot symbol to the value one for the symbol value equal to the pilot symbol and to the value zero for other symbol values.

4. Method according to claim 1, **characterised in that** the source further transfers pilot symbols not spread in the frequency domain by the Discrete Fourier Transform and **in that** the channel impulse response is further dependent of the sum of the energies of the pilot symbols.

5. Method according to any of the claims 1 to 4, **characterised in that** the channel impulse response is estimated iteratively a predetermined number of times.

6. Device for estimating a channel impulse response between a source and a receiver, data transmitted by the source being coded and organized as data symbols, data symbols being converted from serial to parallel and spread in the frequency domain by a Discrete Fourier Transform, the data symbols spread by the Discrete Fourier Transform being mapped on $P$ sub-carriers allocated for transmission among $N$ sub-carriers of a frequency band, transformed back in the time domain by an Inverse Discrete Fourier Transform module, parallel to serial converted and transferred to the receiver under the form of signals representative of data symbols, the device being included in the receiver and comprising:

- means for determining a first matrix with size $PxL$, $L$ being the number of taps assumed in the channel impulse response and determining a Discrete Fourier Transform matrix of size $PxP$ the first matrix being constituted of the first *L* columns of a *PxP* non-normalized Discrete Fourier Transform matrix,
- means for receiving the signals representative of data symbols,
- means for serial to parallel converting, executing a Discrete Fourier Transform and demapping the parallel converted Discrete Fourier Transformed received signals, from N subcarriers to P subcarriers in order to produce demapped received data symbols,

**characterized in that** the device further comprising:

- means for estimating iteratively the channel impulse response from the demapped received data symbols, the channel estimation being dependent of the first matrix, the Discrete Fourier Transform matrix and of a second matrix which is defined according to *a posteriori* probabilities that the transferred data symbols are equal to possible modulation symbols of the modulation scheme, the denominator of the impulse channel response being at next iteration the trace of the second matrix which is a diagonal matrix, the elements of which being diagonal elements of a third matrix obtained from the Discrete Fourier Transform matrix and from a fourth matrix, the elements of the fourth matrix being equal to:

$$\overset{\smile}{R}_{k,k} = \sum_{l=0}^{M-1} APP_i(X_k = \alpha^l)\left|\alpha^l\right|^2$$

and

$$\overset{\smile}{R}_{l,j} = \sum_{y=0}^{M-1}\sum_{x=0}^{M-1} APP_i(X_l = \alpha^x)\cdot APP_i(X_j = \alpha^y)\cdot \alpha^x \alpha^{y*} \quad \text{for} \quad l \neq j$$

where $APP_i(X_k=\alpha^l)$ is *the a posteriori* probability that data symbol $X_k$ is equal to $\alpha^l$, $\alpha^l$ is the *l*-th modulation symbol of the possible modulation symbols, *M* is the total number of possible modulation symbols and $(.)^*$ denotes the conjugate of (.) and the the second matrix is equal to :

$$\overset{\smile}{\mathbf{R}}_{FX} = diag\left(diagM\left(\mathbf{F}\overset{\smile}{\mathbf{R}}\mathbf{F}^\dagger\right)\right)$$

where *diag*(.) denotes a diagonal matrix, in which vector (.) is the diagonal, *diagM*(.) denotes a vector made of the elements of the diagonal of the matrix (.), **F** is the Discrete Fourier Transform matrix and $(.)^\dagger$ denotes the transpose conjugate of (.).

7. Computer program which can be directly loadable into a programmable device, comprising instructions or portions of code for implementing the steps of the method according to claims 1 to 5 when said computer program is executed on a programmable device.

**Patentansprüche**

1. Verfahren zum Schätzen einer Kanalimpulsantwort zwischen einer Quelle und einem Empfänger, wobei durch die Quelle gesendete Daten codiert und als Datensymbole organisiert werden, wobei Datensymbole von seriell zu parallel umgewandelt und im Frequenzbereich durch eine Diskrete Fourier-Transformation gespreizt werden, wobei die durch die Diskrete Fourier-Transformation gespreizten Datensymbole auf zur Sendung zugeteilte *P* Hilfsträger unter *N* Hilfsträgern eines Frequenzbands abgebildet, durch ein Modul für eine Inverse Diskrete Fourier-Transformation in den Zeitbereich zurücktransformiert, von parallel zu seriell umgewandelt und unter der Form von Signalen zum Empfänger transferiert werden, die Datensymbole darstellen, wobei das Verfahren die folgenden durch den Empfänger ausgeführten Schritte aufweist:

- Bestimmen (E500) einer ersten Matrix mit einer Größe *PxL*, wobei *L* die Anzahl von Abgriffen ist, die in der Kanalimpulsantwort angenommen sind, und Bestimmen einer Matrix für eine Diskrete Fourier-Transformation einer Größe *PxP*, wobei die erste Matrix aus den ersten *L* Spalten einer nicht normalisierten *PxP*-Matrix für eine Diskrete Fourier-Transformation gebildet ist,

- Demodulieren des Empfangens der Signale, die Datensymbole darstellen,
- (E501) Umwandeln von seriell zu parallel, Ausführen einer Diskreten Fourier-Transformation und Auflösen der Abbildung der parallelgewandelten, einer Diskreten Fourier-Transformation unterzogenen, empfangenen Signale von *N* Hilfsträgern zu *P* Hilfsträgern, um einem Auflösen der Abbildung unterzogene, empfangene Datensymbole zu erzeugen,

**dadurch gekennzeichnet, dass** das Verfahren die folgenden Schritte aufweist:

- iteratives Schätzen (S503 bis S510) der Kanalimpulsantwort von den einem Auflösen der Abbildung unterzogenen, empfangenen Datensymbolen, wobei die Kanalschätzung abhängt von der ersten Matrix, der Matrix für eine Diskrete Fourier-Transformation und einer zweiten Matrix, die gemäß *A-posteriori*-Wahrscheinlichkeiten definiert ist, dass die transferierten Datensymbole gleich möglichen Modulationssymbolen des Modulationsschemas sind, wobei der Nenner der Impulskanalantwort bei einer nächsten Iteration die Spur der zweiten Matrix ist, die eine Diagonal-matrix ist, von welcher die Elemente diagonale Elemente einer aus der Matrix für eine Diskrete Fourier-Transformation und aus einer vierten Matrix erhaltenen dritten Matrix sind, wobei die Elemente der vierten Matrix gleich folgendem sind:

$$\overline{R}_{k,k} = \sum_{l=0}^{M-1} APP_i(X_k = \alpha^l)|\alpha^l|^2$$

und

$$\overline{R}_{l,j} = \sum_{y=0}^{M-1}\sum_{x=0}^{M-1} APP_i(X_l = \alpha^x) \cdot APP_i(X_j = \alpha^y) \cdot \alpha^x \alpha^{y*} \qquad \text{für } l \neq j$$

wobei $APP_i(X_k=\alpha^l)$ die *A-posteriori*-Wahrscheinlichkeit ist, dass ein Datensymbol $X_k$ gleich $\alpha^l$ ist, $\alpha^l$ das *l*-te Modulationssymbol der möglichen Modulationssymbole ist, M die gesamte Anzahl von möglichen Modulationssymbolen ist und $(.)^*$ die Konjugierte von (.) bezeichnet, und die zweite Matrix gleich folgendem ist:

$$\overline{R}_{\text{FX}} = diag\left(diagM\left(\mathbf{F}\overline{\overline{R}}\mathbf{F}^\dagger\right)\right)$$

wobei *diag(.)* eine Diagonalmatrix bezeichnet, in welcher ein Vektor (.) die Diagonale ist, *diagM(.)* einen Vektor bezeichnet, der aus den Elementen der Diagonalen der Matrix (.) gebildet ist, **F** die Matrix für eine Diskrete Fourier-Transformation ist und $(.)^\dagger$ die Transponiertkonjugierte von (.) bezeichnet.

2. Verfahren nach Anspruch 1, **dadurch gekennzeichnet, dass** die Kanalimpulsantwort bei der (*i*+1)-ten Iteration gemäß der folgenden Formel bestimmt wird:

$$h_l^{(i+1)} = \frac{A_l + B_l + C_l}{Trace(\overline{R}_{\text{FX}})}$$

wobei $A_l$, $B_l$ und $C_l$ für jedes *l*=0 zu *L*-1 bestimmt wird, $h_l^{(i)}$ der *l*-te Abgriff der Kanalimpulsantwort bei der i-ten Iteration ist,

$$A_l = h_l^{(i)} Trace\left(\overline{R}_{\text{FX}}\right)$$

$$B_l = \beta_l \sum_{k=0}^{P-1} \Omega_{k,l}^* Y_k \left( \mathbf{F} \bar{\mathbf{R}} \right)_k^*$$

$$C_l = -\beta_l \sum_{k=0}^{P-1} \Omega_{k,l}^* H_k \left( \mathbf{F} \bar{\mathbf{R}} \mathbf{F}^\dagger \right)_{k,k}$$

$$H_k = \sum_{l'} h_{l'}^{(i)} \Omega_{k,l'}$$

$\Omega_{k,l'}$ der Koeffizient bei der k-ten Reihe und der $l'$-ten Spalte der ersten Matrix $\Omega$ ist, $Y_k$ der $k$-te Koeffizient eines Vektors der Größe P von einer Auflösung einer Abbildung unterzogenen, empfangenen Datensymbolen ist, $(.)^\dagger$ die Transponiert-konjugierte von $(.)$ bezeichnet und $(.)^*$ die Konjugierte von $(.)$ bezeichnet.

3. Verfahren nach Anspruch 1, **dadurch gekennzeichnet, dass** die Quelle weiterhin im Frequenzbereich durch die Diskrete Fourier-Transformation gespreizte Pilotsymbole transferiert und der Empfänger die *A-posteriori*-Wahrscheinlichkeit jedes Pilotsymbols auf den Wert Eins für den Symbolwert einstellt, der gleich dem Pilotsymbol ist, und auf den Wert Null für andere Symbolwerte.

4. Verfahren nach Anspruch 1, **dadurch gekennzeichnet, dass** die Quelle weiterhin im Frequenzbereich durch die Diskrete Fourier-Transformation nicht gespreizte Pilotsymbole transferiert und dass die Kanalimpulsantwort weiterhin von der Summe der Energien der Pilotsymbole abhängt.

5. Verfahren nach einem der Ansprüche 1 bis 4, **dadurch gekennzeichnet, dass** die Kanalimpulsantwort eine vorbestimmte Anzahl von Malen iterativ geschätzt wird.

6. Vorrichtung zum Schätzen einer Kanalimpulsantwort zwischen einer Quelle und einem Empfänger, wobei durch die Quelle gesendete Daten codiert und als Datensymbole organisiert sind, wobei Datensymbole von seriell zu parallel umgewandelt und im Frequenzbereich durch eine Diskrete Fourier-Transformation gespreizt sind, wobei die durch die Diskrete Fourier-Transformation gespreizten Datensymbole auf zur Sendung zugeteilte P Hilfsträger unter N Hilfsträgern eines Frequenzbands abgebildet, durch ein Modul für eine Inverse Diskrete Fourier-Transformation in den Zeitbereich zurücktransformiert, von parallel zu seriell umgewandelt und unter der Form von Signalen zum Empfänger transferiert sind, die Datensymbole darstellen, wobei die Vorrichtung im Empfänger enthalten ist und folgendes aufweist:

   - eine Einrichtung zum Bestimmen einer ersten Matrix mit einer Größe PxL, wobei L die Anzahl von Abgriffen ist, die in der Kanalimpulsantwort angenommen sind, und zum Bestimmen einer Matrix für eine Diskrete Fourier-Transformation einer Größe *PxP*, wobei die erste Matrix aus den ersten *L* Spalten einer nicht normalisierten *PxP*-Matrix für eine Diskrete Fourier-Transformation gebildet ist,
   - eine Einrichtung zum Empfangen der Signale, die Datensymbole darstellen,
   - eine Einrichtung zum Umwandeln von seriell zu parallel, zum Ausführen einer Diskreten Fourier-Transformation und zum Auflösen der Abbildung der parallelgewandelten, einer Diskreten Fourier-Transformation unterzogenen, empfangenen Signale von *N* Hilfsträgern zu P Hilfsträgern, um einem Auflösen der Abbildung unterzogene, empfangene Datensymbole zu erzeugen,

   **dadurch gekennzeichnet, dass** die Vorrichtung weiterhin folgendes aufweist:

   - eine Einrichtung zum iterativen Schätzen der Kanalimpulsantwort von den einem Auflösen der Abbildung unterzogenen, empfangenen Datensymbolen, wobei die Kanalschätzung abhängt von der ersten Matrix, der Matrix für eine Diskrete Fourier-Transformation und einer zweiten Matrix, die gemäß *A-posteriori*-Wahrscheinlichkeiten definiert ist, dass die transferierten Datensymbole gleich möglichen Modulationssymbolen des Modulationsschemas sind, wobei der Nenner der Impulskanalantwort bei einer nächsten Iteration die Spur der zweiten Matrix ist, die eine Diagonalmatrix ist, von welcher die Elemente diagonale Elemente einer aus der Matrix für eine Diskrete Fourier-Transformation und aus einer vierten Matrix erhaltenen dritten Matrix sind, wobei die Elemente der vierten Matrix gleich folgendem sind:

$$\overline{\mathbb{R}}_{k,k} = \sum_{l=0}^{M-1} APP_i(X_k = \alpha^l)\left|\alpha^l\right|^2$$

und

$$\overline{\mathbb{R}}_{i,j} = \sum_{y=0}^{M-1} \sum_{x=0}^{M-1} APP_i(X_i = \alpha^x) \cdot APP_i(X_j = \alpha^y) \cdot \alpha^x \alpha^{y*} \qquad \text{für } i \neq j$$

wobei $APP_i(Xk=\alpha^l)$ die *A-posteriori*-Wahrscheinlichkeit ist, dass ein Datensymbol $X_k$ gleich $\alpha^l$ ist, $\alpha^l$ das $l$-te Modulationssymbol der möglichen Modulationssymbole ist, $M$ die gesamte Anzahl von möglichen Modulationssymbolen ist und (.)$^*$ die Konjugierte von (.) bezeichnet, und die zweite Matrix gleich folgendem ist:

$$\mathbf{R}_{FX} = diag\left(diagM\left(\mathbf{F}\overline{\mathbf{R}}\mathbf{F}^\dagger\right)\right)$$

wobei *diag(.)* eine Diagonalmatrix bezeichnet, in welcher ein Vektor (.) die Diagonale ist, *diagM(.)* einen Vektor bezeichnet, der aus den Elementen der Diagonalen der Matrix (.) gebildet ist, **F** die Matrix für eine Diskrete Fourier-Transformation ist und (.)$^\dagger$ die Transponiertkonjugierte von (.) bezeichnet.

7. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 5, wenn das Computerprogramm auf einer programmierbaren Vorrichtung ausgeführt wird.

**Revendications**

1. Procédé pour estimer une réponse impulsionnelle de canal entre une source et un récepteur, des données transmises par la source étant codées et organisées sous forme de symboles de données, des symboles de données étant convertis de série en parallèle et étalés dans le domaine fréquentiel par une Transformée de Fourier Discrète, les symboles de données transformés par la transformée de Fourier discrète étant mappés sur *P* sous-porteuses affectées à la transmission parmi *N* sous-porteuses d'une bande de fréquences, transformés en retour dans le domaine temporel par un module de transformée de Fourier Discrète Inverse, convertis de parallèle en série et transférés au récepteur sous la forme de signaux représentatifs de symboles de données, le procédé comportant les étapes, exécutées par le récepteur, de:

   - détermination (E500) d'une première matrice de taille *PxL, L* étant le nombre d'échantillons supposés dans la réponse impulsionnelle de canal et détermination d'une matrice de Transformée de Fourier Discrète de taille *PxP*, la première matrice étant constituée des premières *L* colonnes d'une *PxP* Transformée de Fourier Discrète non normalisée,
   - démodulation des signaux reçus représentatifs de symboles de données,
   - (E501) conversion de série en parallèle, exécution d'une Transformée de Fourier Discrète et démappage des signaux reçus convertis en parallèle et transformés par Transformée de Fourier Discrète Inverse, de *N* sous-porteuses à *P* sous-porteuses afin de produire des symboles de données reçus démappés,

   **caractérisé en ce que** le procédé comporte l'étape de :

   - estimation (S503 à S510) itérative de la réponse impulsionnelle de canal à partir des symboles de données reçus démappés, l'estimation de canal étant dépendante de la première matrice, de la matrice de Transformée de Fourier discrète et d'une seconde matrice qui est définie selon des probabilités *a posteriori* que les symboles de données transférés sont égaux à des symboles de modulation possibles du schéma de modulation, le dénominateur de la réponse impulsionnelle de canal étant la trace de la deuxième matrice qui est une matrice diagonale dont les éléments sont des éléments diagonaux d'une troisième matrice obtenue à partir de la matrice de Transformée de Fourier Discrète et à partir d'une quatrième matrice, les éléments de la quatrième matrice étant égaux à :

$$R_{k,k} = \sum_{l=0}^{M-1} APP_i(X_k = \alpha^l) |\alpha^l|^2$$

et

$$R_{l,j} = \sum_{y=0}^{M-1} \sum_{x=0}^{M-1} APP_i(X_l = \alpha^x) \cdot APP_i(X_j = \alpha^y) \cdot \alpha^x \alpha^{y*} \quad \text{pour} \quad l \neq j$$

où $APP_i(X_k=\alpha^l)$ est la probabilité *a posteriori* que le symbole de données $X_k$ est égal à $\alpha^l$, $\alpha^l$ est le *l*-ième symbole de modulation des symboles de modulation possibles, *M* est le nombre total de symboles de modulation possibles et $(.)^*$ représente le conjugué de (.) et la seconde matrice est égale à :

$$\mathbf{R_{FX}} = diag\left(diagM\left(\mathbf{FRF^\dagger}\right)\right)$$

où *diag(.)* représente une matrice diagonale dans laquelle le vecteur (.) est la diagonale, *diagM*(.) représente un vecteur constitué des éléments de la diagonale de la matrice (.), **F** est la matrice de la Transformée de Fourier Discrète et $(.)^\dagger$ représente la conjuguée transposée de (.).

2. Procédé selon la revendication 1, **caractérisé en ce que** la réponse impulsionnelle de canal à la (i + 1)-ième itération est déterminée selon la formule suivante :

$$h_l^{(i+1)} = \frac{A_l + B_l + C_l}{Trace(\mathbf{R_{FX}})}$$

où $A_l$, $B_l$, et $C_l$ sont déterminés pour chaque *l*=0 à *L*-1, $h_l^{(i)}$ est le *l*-ième échantillon de la réponse impulsionnelle de canal à la i-ième itération,

$$A_l = h_l^{(i)} Trace\left(\mathbf{R_{FX}}\right)$$

$$B_l = \beta_l \sum_{k=0}^{P-1} \Omega_{k,l}^* Y_k \left(\mathbf{FX}\right)_k^*$$

$$C_l = -\beta_l \sum_{k=0}^{P-1} \Omega_{k,l}^* H_k \left(\mathbf{FRF^\dagger}\right)_{k,k}$$

$$H_k = \sum_{l'} h_{l'}^{(i)} \Omega_{k,l'}\ .$$

$\Omega_{k,l}$ est le coefficient à la *k*-ième ligne et *l*-ième colonne de la première matricex $\Omega$, $Y_k$ est le *k*-ième coefficient d'un vecteur de taille *P* de symboles de données démappés,

(.)$^{\dagger}$ représente la conjuguée transposée de (.) et (.)* représente le conjugué de (.).

3. Procédé selon la revendication 1, **caractérisé en ce que** la source transfère en outre des symboles pilotes étalés dans le domaine fréquentiel par la Transformée de Fourier Discrète et le récepteur fixe la probabilité *a posteriori* de chaque symbole pilote à la valeur un pour la valeur de symbole égale à un symbole pilote et à la valeur zéro pour les autres valeurs de symbole.

4. Procédé selon la revendication 1, **caractérisé en ce que** la source transfère en outre des symboles pilotes non étalés dans le domaine fréquentiel par la transformée de Fourier discrète et **en ce que** la réponse impulsionnelle de canal dépend en outre de la somme des énergies des symboles pilotes.

5. Procédé selon l'une quelconque des revendications 1 à 4, **caractérisé en ce que** la réponse impulsionnelle de canal est estimée itérativement un nombre prédéterminé de fois.

6. Dispositif pour estimer une réponse impulsionnelle de canal entre une source et un récepteur, des données transmises par la source étant codées et organisées sous forme de symboles de données, des symboles de données étant convertis de série en parallèle et étalés dans le domaine fréquentiel par une Transformée de Fourier Discrète, les symboles de données transformés par la transformée de Fourier discrète étant mappés sur *P* sous-porteuses affectées à la transmission parmi *N* sous-porteuses d'une bande de fréquences, transformés en retour dans le domaine temporel par un module de transformée de Fourier Discrète Inverse, convertis de parallèle en série et transférés au récepteur sous la forme de signaux représentatifs de symboles de données, le dispositif étant compris dans le récepteur et comportant :

   - des moyens de détermination d'une première matrice de taille *PxL, L* étant le nombre d'échantillons supposés dans la réponse impulsionnelle de canal et de détermination d'une matrice de Transformée de Fourier Discrète de taille *PxP*, la première matrice étant constituée des premières *L* colonnes d'une *PxP* Transformée de Fourier Discrète non normalisée,
   - des moyens de réception des signaux représentatifs de symboles de données,
   - des moyens de conversion de série en parallèle, exécution d'une Transformée de Fourier Discrète et de démappage des signaux reçus convertis en parallèle et transformés par Transformée de Fourier Discrète Inverse, de *N* sous-porteuses à *P* sous-porteuses afin de produire des symboles de données reçus démappés,

   **caractérisé en ce que** le dispositif comporte en outre :

   - des moyens d'estimation itérative de la réponse impulsionnelle de canal à partir des symboles de données reçus démappés, l'estimation de canal étant dépendante de la première matrice, de la matrice de Transformée de Fourier discrète et d'une seconde matrice qui est définie selon des probabilités *a posteriori* que les symboles de données transférés sont égaux à des symboles de modulation possibles du schéma de modulation, le dénominateur de la réponse impulsionnelle de canal étant la trace de la deuxième matrice qui est une matrice diagonale dont les éléments sont des éléments diagonaux d'une troisième matrice obtenue à partir de la matrice de Transformée de Fourier Discrète et à partir d'une quatrième matrice, les éléments de la quatrième matrice étant égaux à :

$$R_{k,k} = \sum_{l=0}^{M-1} APP_i(X_k = \alpha^l)\left|\alpha^l\right|^2$$

et

$$R_{l,j} = \sum_{y=0}^{M-1}\sum_{x=0}^{M-1} APP_i(X_l = \alpha^x) \cdot APP_i(X_j = \alpha^y) \cdot \alpha^x \alpha^{y*} \quad \text{pour} \quad l \neq j$$

où APP$_i$(X$_k$=$\alpha^l$) est la probabilité *a posteriori* que le symbole de données X$_k$ est égal à $\alpha^l$, $\alpha^l$ est le *l*-ième symbole de modulation des symboles de modulation possibles, M est le nombre total de symboles de modulation possibles et (.)* représente le conjugué de (.) et la seconde matrice est égale à :

$$\mathbf{R}_{\mathbf{FX}} = diag\left( diagM\left( \mathbf{FRF}^{\dagger} \right) \right)$$

où $diag$(.) représente une matrice diagonale dans laquelle le vecteur (.) est la diagonale, $diagM$(.) représente un vecteur constitué des éléments de la diagonale de la matrice (.), $\mathbf{F}$ est la matrice de la Transformée de Fourier Discrète et (.)$^{\dagger}$ représente la conjuguée transposée de (.).

**7.** Programme d'ordinateur qui peut être directement chargé dans un dispositif programmable, comprenant des instructions ou des parties de code pour mettre en oeuvre les étapes du procédé selon les revendications 1 à 5 lorsque ledit programme informatique est exécuté sur un dispositif programmable.

Src

Source

Rec

## Fig. 1

Rec

200 — Processor

203 — RAM        Network I/F — 205

201

202 — ROM

## Fig. 2

205

300 | 301 | 302 | 303

305 → Cyclic Prefex deletion → Serial to parallel → DFT of Size N → N to P demapping

310

Channel estimation

## Fig. 3

310

400 | 401 | 402

Demodulation → Deinterleaver → SISO decoder

405 | 404 | 403

EM channel estimation ← Modulation ← Interleaver

## Fig. 4

S500 — Determine $\mathbf{F}$ and $\mathbf{\Omega}$

S501 — Demodulation of $\mathbf{Y}$

S502 — Initial estimation on pilots

S503 — Demodulation SC-FDMA

S504 — Determine $APP_i$ for coded bits

S505 — Determine each $APP_i(X_k = \alpha^l)$

S506 — Determine $\mathbf{R_{FX}}$

S507 — Determine $\mathrm{diag}(\mathbf{FX})$

S508 — Determine $\mathbf{h}^{(i+1)}$

S509 — $i = i+1$

S510 — $i = imax$ ?

Fig. 5

S600 — Determine $\mathbf{F}$ and $\mathbf{\Omega}$

S601 — Demodulation of $\mathbf{Y}$

S602 — Initial estimation on pilots

S603 — Demodulation SC-FDMA

S604 — Determine $APP_i$ for coded bits

S605 — Determine each $APP_i(X_k = \alpha^l)$

S606 — Determine trace of $\mathbf{R_{FX}}$

S607 — Determine $A_l$, $B_l$, $C_l$

S608 — Determine each $h_l(i+1)$

S609 — $i = i+1$

S610 — $i = imax$ ?

## Fig. 6

$$b_0^{\,0} \ldots b_0^{\,m-1} \ldots\ldots \; b_k^{\,0} \ldots b_k^{\,m-1} \ldots\ldots \; b_{N-1}^{\,0} \ldots b_{N-1}^{\,m-1}$$

$$\underbrace{\qquad\qquad}_{X_0} \quad \underbrace{\qquad\qquad}_{X_k} \quad \underbrace{\qquad\qquad}_{X_{N-1}}$$

Fig. 7

Fig. 8

S900 — Determine **F** and **Ω**

S901 — Demodulation of **Y**

S902 — Initial estimation on pilots

S903 — Demodulation SC-FDMA

S904 — Determine $APP_i$ for coded bits

S905 — Determine each $APP_i(X_k = \alpha^l)$

S906 — Determine trace of $\mathbf{R_{FX}}$

S907 — Determine $A_l'$, $B_l'$, $C_l'$

S908 — Determine each $h_l(i+1)$

S909 — $i = i+1$

S910 — $i = imax$ ?

# Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANG LIU.** Simplified EM channel estimation in LTE system. *acoustic speech and signal processing,* 22 May 2011
- **HANH PHAM.** A joint channel estimation and data detection receiver for multiuser MIMO IFDMA systems. *IEEE transaction*

- **XINGZHONG XIONG.** Effect of channel estimation error on the performance of interleave division multiple access system. *advanced communication technology,* 15 February 2009
- **YANG LIU.** EM based channel estimation for coded multicarrier transmission. *IEEE transaction on wireless communications,* 01 October 2011